Europäisches Patentamt

European Patent Office

Office européen des brevets

Veröffentlichungsnummer: **0 287 865**

**A2**

# EUROPÄISCHE PATENTANMELDUNG

Anmeldenummer: 88105144.5

Int. Cl.⁴: **B23Q 7/03**

Anmeldetag: 30.03.88

Priorität: 18.04.87 DE 3713260
05.11.87 DE 8714714 U

Veröffentlichungstag der Anmeldung:
26.10.88 Patentblatt 88/43

Benannte Vertragsstaaten:
AT CH DE FR LI SE

Anmelder: Hundegger, Hans
Kemptener Strasse 1
D-8941 Hawangen(DE)

Erfinder: Hundegger, Hans
Kemptener Strasse 1
D-8941 Hawangen(DE)

Vertreter: Pfister, Helmut, Dipl.-Ing.
Buxacher Strasse 9
D-8940 Memmingen/Bayern(DE)

Abbundvorrichtung zum Bearbeiten von Kanthölzern oder dergleichen.

Als Antrieb der Werkstücke (3) verwendet die Abbundvorrichtung ein endloses Fördermittel, z.B. eine Förderkette (1), die durch Zähne oder Spitzen (8) die Werkstücke (3) mitnimmt. Durch Umlenkeinerichtungen (4) ist sichergestellt, daß im Bereich der Bearbeitungsaggregate (5) die Förderkette (1) vom Werkstück (3) einen ausreichenden Abstand aufweist, um Kollisionen zwischen der Förderkette (1) und den Werkzeugen der Bearbeitungsaggregate (5) auszuschließen.

Fig. 3

## Abbundvorrichtung zum Bearbeiten von Kanthölzern oder dergleichen

Die Erfindung betrifft eine Abbundvorrichtung zum Bearbeiten von Kanthölzern, Brettern oder dergleichen mit Bearbeitungsaggregaten z. B. zum Sägen, Fräsen, Bohren usw., die hintereinander angeordnet sind, und denen das Werkstück auf einer Transportbahn zugeführt wird, mit einer Transporteinrichtung, die von einer programmierbaren Steuereinrichtung gesteuert ist und das Werkstück nacheinander in vorbestimmte Bearbeitungspositionen bezüglich der Bearbeitungsaggregate bringt.

Eine Abbundvorrichtung der vorstehend beschriebenen Gattung ist beispielsweise durch die DE-PS 34 20 080 bekanntgeworden. Diese bekannte Abbundvorrichtung besitzt als Transporteinrichtung ein am Maschinengestell geführtes Zugorgan mit einem senkrecht beweglichen Stempel, der in das Werkstück einpressbar ist, und der das Werkstück zu den Bearbeitungsaggregaten - schleppt. Das Werkstück liegt dabei auf der Transportbahn, die im wesentlichen aus Rollen gebildet ist. Die Steuereinrichtung hält nach einem vorbestimmten Programm das Werkstück in den jeweiligen Bearbeitungspositionen an, so daß die Bearbeitungsvorgänge durchgeführt werden können.

Bei einer anderen vorbekannten Abbundmaschine im wesentlicher gleicher Ausbildung, wird anstelle eines senkrecht geführten Stempels ein verschwenkbarer Mitnehmer verwendet, der ebenfalls in das Werkstück eingreift und dieses - schleppt.

Den bekannten Abbundvorrichtungen ist gemeinsam, daß nur eine einzige schleppende Transporteinrichtung vorgesehen ist, die die Werkstücke durch alle Bearbeitungsstationen hindurchfördert, und die das Werkstück dann nach Verlassen der letzten Bearbeitungsstation wieder freigibt. Anschließend muß die Transporteinrichtung in die Ausgangsstellung zurückgefahren werden, um ein neues Werkstück zu transportieren. Während der Rückwärtsbewegung, die eine gewisse Zeit in Anspruch nimmt, arbeitet die Vorrichtung nicht.

Bei den bekannten Abbundvorrichtungen muß ferner die Stelle, an der die Transporteinrichtung am Werkstück angreift, ausgewählt werden. Es müssen Stellen vermieden werden, an denen Bearbeitungsvorgänge vorzunehmen sind, um eine Kollision der Werkzeuge der Bearbeitungsaggregate mit dem Mitnahmeelement der Transporteinrichtung auszuschließen.

Es ist Aufgabe der Erfindung, die bekannte Abbundvorrichtung der eingangs beschriebenen Gattung dahingehend weiter zu verbessern, daß bei voller Beibehaltung der Vorteile der bekannten Vorrichtung eine größere Bearbeitungsgeschwindigkeit erhalten wird. Diese erreicht die Erfindung dadurch, daß bei der Abbundvorrichtung der eingangs beschriebenen Gattung die Transporteinrichtung aus mindestens einem endlosen Fördermittel besteht, das am Werkstück anliegt, und das Werkstück praktisch schlupffrei mitnehmt, wobei das Fördermittel mittels Umlenkeinrichtungen derart geführt ist, daß das Fördermittel vor einem Bearbeitungsaggregat vom Werkstück abheben.

Durch den erfindungsgemäßen Vorschlag als Transporteinrichtung ein Fördermittel, z.B. eine Förderkette zu verwenden, wird der Vorteil erhalten, daß die Ansatzstelle der Transporteinrichtung am Werkstück nicht mehr besonders ausgewählt werden muß. Da die Förderkette oder dergleichen im Bereich der Bearbeitungsaggregate vom Werkstück abhebt, ist eine Kollision mit den Werkzeugen der Bearbeitungsaggregate ausgeschlossen. Der Mitnahmeeffekt, den die Förderkette oder dergleichen auf das Werkstück in den üblichen Bereichen ausübt, bleibt jedoch erhalten.

Die Erfindung erreicht den weiteren Vorteil, daß nicht abgewartet werden muß, bis das eine Werkstück alle Bearbeitungsaggregate durchlaufen hat. Bei der Erfindung ist es möglich, ein zweites Werkstück in Kontakt mit der Förderkette oder dergleichen zu bringen, auch wenn sich das erste Werkstück noch in der Bearbeitung befindet. Das Steuerprogramm, das auf beide Werkstücke einwirkt, ist dem sinngemäß anzupassen, was ohne Schwierigkeiten möglich ist. Der weitere Vorteil der Erfindung besteht darin, daß die Transporteinrichtung nicht für den Rückhub umgesteuert werden muß, da ein Rückhub bei der endlosen Förderkette oder dergleichen entfällt.

Die Erfindung kann in verschiedenen Varianten angewandt werden. Es können beispielsweise mehrere Förderketten oder dergleichen vorgesehen sein, die nacheinander am Werkstück angreifen und die durch einen gemeinsamen Antrieb gekoppelt sind. Dabei kann die eine Förderkette vor den Bearbeitungsaggregaten vorgesehen sein, die andere Förderkette nimmt dagegen das Werkstück hinter den Bearbeitungsaggregaten mit.

Bei der Variante der Erfindung ist mindestens eine Förderkette oder dergleichen vorgesehen, die im Bereich zwischen zwei Bearbeitungsaggregaten am Werkstück angreift.

Die Erfindung ist aber auch mit einer einzigen Förderkette oder dergleichen verwirklichbar. Diese wird mittels Umlenkeinrichtungen vor einem Bearbeitungsaggregat vom Werkstück abgehoben und liegt hinter dem Bearbeitungsaggregat wieder auf dem Werkstück auf und transportiert dieses weiter.

Solche Umlenkeinrichtungen sind ohne Probleme verwirklichbar, da die für die Erfindung zu verwendenden Förderketten beispielsweise an den Gelenkstellen Rollen besitzen, denen durch geeignete Bahnen der gewünschte Förderkettenverlauf aufgezwungen werden kann.

Da es bei der Erfindung ohne weiteres möglich ist, das Werkstück im Bereich der Bearbeitungsaggregate sicher zu führen, kann auch in vielen Fällen auf die Verwendung zusätzlicher Spannmittel verzichtet werden, die während des Bearbeitungsvorganges das Werkstück beispielsweise gegen eine Unterlage pressen, um dieses sicher festzuhalten. Bei den herkömmlichen Transporteinrichtungen, die mit einem einzigen Dorn arbeiten, war eine solche Fixierung nicht in ausreichendem Maße gegeben, so daß jeweils zusätzliche Spannmittel notwendig wurden.

Nach einem weiteren Vorschlag der Erfindung ist die Förderkette, oder sind die Förderketten oder dergleichen, an einem anhebbarem Rahmen geführt. Auf diese Weise wird es einfach möglich, die Transporteinrichtung unterschiedlichen Werkstückdicken anzupassen und außerdem auch den Einlegevorgang des Werkstückes in die Transporteinrichtung zu vereinfachen.

Es wird ferner vorgeschlagen, daß die Förderkettenglieder Zähne oder Spitzen aufweisen, die in die Werkstücke eingreifen.

Günstig ist es, wenn die Förderkette oder dergleichen mit seitlichem Spiel im Rahmen oder dergleichen geführt ist. Die seitliche Beweglichkeit der Förderkette soll sicherstellen, daß in jeder Stellung, in die die Förderkette das Werkstück transportiert, dieses Werkstück beispielsweise in seitlichen Anschlägen festgespannt werden kann. Ein solches Festspannen und seitliches Fixieren ist für bestimmte Bearbeitungsgänge vorteilhaft bzw. notwendig.

In der Zeichnung sind einige Ausführungsbeispiele der Erfindung schematisch dargestellt. Es zeigen:

Fig. 1 eine Seitenansicht der Abbundanlage gemäß der Erfindung,

Fig. 2 eine Seitenansicht eines abgewandelten Ausführungsbeispiels,

Fig. 3 eine vergrößerte Darstellung einer Einzelheit der Erfindung und

Fig. 4 eine Schnittdarstellung durch die Darstellung der Fig 3 entsprechend der Schnittlinie IV-IV.

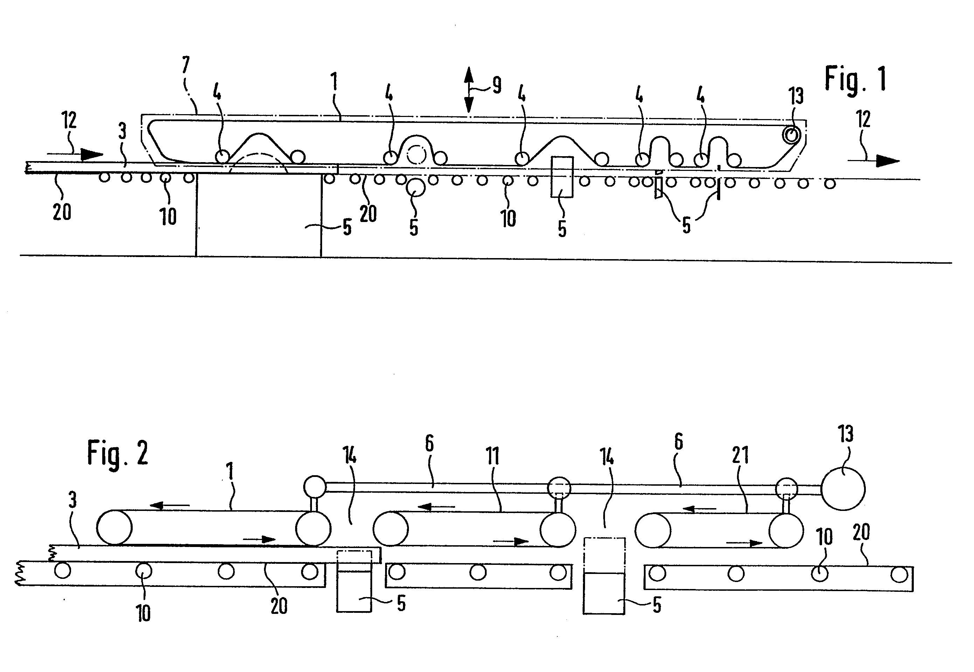

In der Fig. 1 ist eine Abbundvorrichtung gezeigt mit einer einzigen umlaufenden Förderkette 1. Die Förderkette ist hierbei nur schematisch angedeutet. Sie ist im Rahmen 7 gelagert und der Rahmen der Förderkette 1 kann in Richtung der Pfeile 9 angehoben bzw. abgesenkt werden. Die Werkstücke 3, also beispielsweise die Holzbalken liegen beim Abbundvorgang auf den Rollen 10 auf und bewegen sich in Richtung der Pfeile 12 durch die Vorrichtung Die Rollen 10, die nicht angetrieben sind, bilden dabei die Transportbahn 20 für die Werkstücke.

Diese Transportbahn 20 für die Werkstücke 3 erstreckt sich noch ein ausreichendes Maß vor und hinter der Förderkette 1, um die Werkstücke auflegen und unter die Förderkette einführen zu können, bzw. um einen Ablageraum für die bearbeiteten Werkstücke zu erhalten.

In der Transportbahn 20 sind eine Mehrzahl von Bearbeitungsaggregaten 5 eingesetzt und die Transportbahn kann im Bereich dieser Bearbeitungsaggregate auch durch Gleitbahnen oder dergleichen gebildet sein. Die Bearbeitungsaggregate, die an sich bekannt sind, besitzen eine unterschiedliche Ausbildungsform. Es handelt sich beispielsweise um hydraulisch schwenkbare Untertischkappsägen, Überplattungs-und Zapfenfräsen, Kettenstemmer, kombinierte Kerven-und Zapfenfräsen sowie Nagelbohrgeräte. Auch andere, hier nicht erwähnte Bearbeitungsaggregate sind möglich. Die Werkzeuge dieser Bearbeitungsgeräte sind in der Regel unter der Transportbahn 20 gelagert und wirken vorzugsweise von unten auf die Werkstücke ein. Es ist klar, daß die betreffenden Werkzeuge bei der Bearbeitung auch wenigstens teilweise nach oben aus den Werkstücken hervortreten. Um eine Kollision mit der Förderkette zu vermeiden, ist diese jeweils im Bereich der Bearbeitungsaggregate nach oben umgelenkt. Dieser Umlenkung dienen die Umlenkeinrichtungen 4, die beispielsweise Rollen-oder Schienenbahnen sein können.

Die Förderkette 1 wird durch den Antrieb 13 mittels Impulsgeber bewegt. Der Antrieb ist dabei, wie ansich bekannt, derart ausgestaltet, daß er das Werkstück 3 jeweils in die richtige Bearbeitungsposition bezüglich der Aggregate 5 bringt.

Es ist klar, daß dann, wenn ein Werkstück mit seinem hinteren Ende das erste Bearbeitungsaggregat passiert hat, es bereits möglich ist, ein neues Werkstück in Eingriff mit der Förderkette zu bringen.

Die Fig. 2 zeigt ein abgewandeltes Ausführungsbeispiel gemäß der Erfindung. In diesem Ausführungsbeispiel sind nur zwei Bearbeitungsaggregate vorgesehen und es sind insgesamt drei Förderketten 1, 11 und 21 angeordnet. Ein gemeinsamer Antrieb 6 treibt alle Förderketten 1, 11 und 21. In den Zwischenräumen 14 zwischen den Förderketten sind jeweils die Bearbeitungsaggregate untergebracht. Der gemeinsame Antrieb 6, der beispielsweise eine Welle sein kann, sorgt für den erforderlichen Gleichlauf der Förderketten 1, 11 und 21. Es ist aber auch möglich, jede Förderkette mit einem separaten Motor zu versehen, und diese Motoren dann sinngemäß gemeinsam synchron zu steuern.

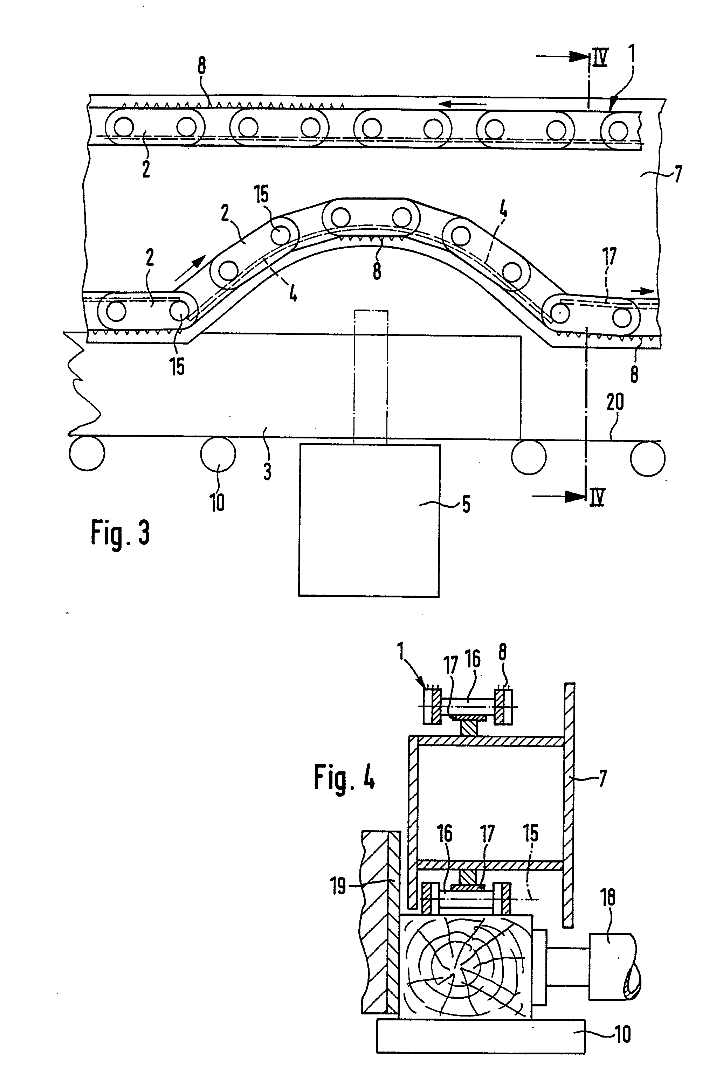

Die Fig. 3 zeigt eine Einzelheit der Erfindung. Die Förderkette 1 besteht, wie ansich bekannt, aus einer Vielzahl von Kettengliedern 2 und die Laschen dieser Kettenglieder besitzen auf der dem Werkstück 3 zugewandten Seite Zähne oder Spitzen 8, die eine sichere schlupffreie Mitnahme des Werkstückes ergeben. An den Gelenken 15 sind, wie ansich bekannt, Rollen oder Walzen 16 angeordnet. Diese Walzen 16 wirken mit Führungsgliedern 17 zusammen, die beispielsweise im Auflagebereich der Förderkette auf dem Werkstück über den Walzen vorgesehen sind, während sie in dem Bereich, in dem wegen der Bearbeitungsaggregate 5 die Förderkette vom Werkstück 3 abzuheben ist, die Walzen 16 auf entsprechenden - schienenartigen Umlenkeinrichtungen 4 aufliegen.

Wie schon ausgeführt, empfiehlt es sich, die Förderketten nur mit ausreichendem seitlichen Spiel am Rahmen 7 oder einer entsprechenden Anordnung zu führen, so daß die Förderkette in horizontaler Richtung seitlich eine ausreichende Beweglichkeit hat. Diese Beweglichkeit läßt sich auch durch federnde Führungsschienen sicherstellen. Durch eine derartige seitliche Beweglichkeit der Förderkette 1 ist es möglich, das Werkstück 3 durch eine beispielsweise pneumatisch angetriebene Spanneinrichtung 18 gegen einen Anschlag 19 zu drücken, wenn es beispielsweise erwünscht ist, zum Zwecke eines Bearbeitungsvorganges das Werkstück in einer genauen Lage zu fixieren. Es ist klar, daß während eines derartigen Bearbeitungsvorgangs die Förderkette 1 stillsteht.

Nach Lösung der Spanneinrichtung, deren Ausbildung und Lage in der Fig. 4 nur schematisch angedeutet ist, kann das Werkstück zur nächsten Bearbeitungsstation bewegt werden.

Da die Mitnahme des Werkstückes durch die Förderketten 1, 11 oder 21 bei der Erfindung durch eine Vielzahl von Zähnen oder Spitzen erfolgt, müssen die einzelnen Zähne oder Spitzen nur verhältnismäßig geringe Kräfte übertragen. Es genügt, wenn diese Zähne oder Spitzen nur mit geringem Kraftaufwand in die Werkstücke eingedrückt werden. Insbesondere ist die Eindrückkraft wesentlich geringer, als beim vorbekannten Stand der Technik, bei dem mit nur einem Dorn oder ganz wenigen Zähnen eine Mitnahmewirkung zustande kommen muß.

Die Förderkette hält auch das Werkstück auf einer großen Fläche auf der aus den Rollen 10 aufgebauten Transportbahn 20 fest, so daß zusätzliche Spannelemente zur Fixierung des Werkstückes während der Bearbeitung in der Regel entbehrlich sind. Es ist klar, daß insbesondere die Förderkette 1 auch noch mit einer nachstellbaren Spanneinrichtung versehen ist, die eine ausreichende Genauigkeit der Positionierung sicherstellt.

Für die Erfindung sind auch Förderketten verwendbar, bei denen die einzelnen Glieder nicht nur aus zwei Laschen, sondern aus einer größeren Zahl von Laschen bestehen. Insbesondere bei derartigen Förderketten kann die Führung der Förderkette auch in anderer Weise als im gezeigten Ausführungsbeispiel erfolgen. So können die Umlenkeinrichtungen nicht nur aus Schienen bestehen, sondern die Umlenkeinrichtungen können auch durch Walzen oder ähnliche Mittel gebildet sein.

Das Fördermittel kann auch als Band oder Gurt gestaltet sein, wobei das Werkstück durch Reibungshaftung oder auch durch zusätzliche zahn- oder nadelartige Mitnahmemittel mitgenommen wird.

## Ansprüche

1. Abbundvorrichtung zum Bearbeiten von Kanthölzern, Brettern oder dergleichen, mit Bearbeitungsaggregaten z. B. zum Sägen, Fräsen, Bohren usw., die hintereinander angeordnet sind, und denen das Werkstück auf einer Transportbahn zugeführt wird, mit einer Transporteinrichtung, die von einer programmierbaren Steuereinrichtung gesteuert ist und das Werkstück nacheinander in vorbestimmte Bearbeitungspositionen bezüglich der Bearbeitungsaggregate bringt, dadurch gekennzeichnet, daß die Transporteinrichtung aus mindestens einem endlosen Fördermittel (1, 11, 21) besteht, das am Werkstück (3) anliegt, und das Werkstück praktisch schlupffrei mitnimmt, wobei das Fördermittel mittels Umlenkeinrichtungen (4) derart geführt ist, daß das Fördermittel (2) vor einem Bearbeitungsaggregat (5) vom Werkstück abhebt.

2. Abbundvorrichtung nach Anspruch 1, dadurch gekennzeichnet, daß das Fördermittel eine Förderkette (1, 11, 21) ist.

3. Abbundvorrichtung nach Anspruch 1 oder 2, dadurch gekennzeichnet, daß mehrere Fördermittel bzw. Förderketten (1, 11, 21) vorgesehen sind die nacheinander am Werkstück (3) angreifen, und die über einen gemeinsamen Antrieb (6) gekoppelt sind.

4. Abbundvorrichtung nach Anspruch 3, dadurch gekennzeichnet, daß mindestens ein Fördermittel bzw. eine Förderkette (11) im Bereich zwischen zwei Bearbeitungsaggregaten (5) am Werkstück (3) angreift.

5. Abbundvorrichtung nach einem oder mehreren der vorhergehenden Ansprüche, dadurch gekennzeichnet, daß eine Förderkette (1) oder dergleichen vorgesehen ist, die mittels einer Umlenkeinrichtung (4) vor einem Bearbeitungsaggregat (5) vom Werkstück (3) abhebt, und hinter dem Bearbeitungsaggregat (5) wieder auf dem Werkstück aufliegt und dieses transportiert.

6. Abbundvorrichtung nach einem oder mehreren der vorhergehenden Ansprüche, dadurch gekennzeichnet, daß die Förderkette oder die Förderketten oder dergleichen in einem anhebbaren Rahmen (7) geführt ist oder geführt sind.

7. Abbundvorrichtung nach einem oder mehreren der vorhergehenden Ansprüche, dadurch gekennzeichnet, daß die Förderkettenglieder (2) Zähne oder Spitzen (8) aufweisen, die in die Werkstücke (3) eingreifen.

8. Abbundvorrichtung nach einem oder mehreren der vorhergehenden Ansprüche, dadurch gekennzeichnet, daß die Förderkette (1) oder dergleichen mit seitlichem Spiel im Rahmen (7) oder dergleichen geführt ist.

Fig. 1

Fig. 2

0 287 865

Fig. 3

Fig. 4